# EUROPEAN PATENT APPLICATION

(11) **EP 2 006 262 A1**
(43) Date of publication of application: **24.12.2008**
(21) Application number: 07738439.4
(22) Date of filing: 13.03.2007
(51) Int. Cl.: C04B 35/581, H01J 61/30

(54) **PROCESS FOR PRODUCING SINTERED ALUMINUM NITRIDE**

(30) Priority: 13.03.2006 JP 2006068204
(71) Applicant: Tokuyama Corporation, Shunan-shi, Yamaguchi-ken 745-8648 (JP)
(72) Inventor: KANECHIKA, Yukihiro, Shunan-shi Yamaguchi 745-8648 (JP); AZUMA, Masanobu, Shunan-shi Yamaguchi 745-8648 (JP)
(74) Representative: Matthews, Derek Peter
(86) International application number: PCT/JP2007/054967
(87) International publication number: WO 2007/105728

(57) **Abstract**

[PROBLEMS] To provide a process for recovering, by a simple means, the light transmission properties of an aluminum nitride sintered body which light transmission properties have been lowered by processing after sintering. [MEANS FOR SOLVING PROBLEMS] A process for producing an aluminum nitride sintered body having improved light transmission properties of the present invention comprises subjecting an ordinary aluminum nitride sintered body to thermal treatment in an inert atmosphere at a temperature of from 1300 to 1400°C for at least 1 hr. A cover for light sources of the present invention comprises a hollow aluminum nitride sintered body having a light transmittance in the visible light region of at least 87%, which body is obtainable by thermally treating a hollow aluminum nitride sintered body in an inert atmosphere at a temperature of 1300 to 1400°C for at least 1 hr.

## Description

### FIELD OF THE INVENTION

The present invention relates to a process for producing an aluminum nitride sintered body. More particularly, it relates to a process for producing an aluminum nitride sintered body, which has excellent light transmission properties and particularly can be used as a translucent cover for a light source having a high luminous efficiency.

### BACKGROUND OF THE INVENTION

Heretofore, as a translucent material, materials transparent to visible light such as transparent resins, glasses, quartz or translucent alumina are appropriately used in accordance with the use environment or cost. For example, transparent resins or glasses are used as a cover (window material) for a light source having low energy strength or a translucent material for transmitting a light having a wavelength relatively not containing ultraviolet light. Furthermore, materials obtainable by using quartz or alumina are used to translucent covers for a light source relatively containing ultraviolet ray or for a light source having high-energy strength which temperature becomes high in the use. Moreover, alumina materials having corrosion resistance are used as a translucent cover for a light source in which a corrosive gas such as halogen gas or the like is used.

Recently, the improvement on light sources has been further progressed and a light source having a higher luminous efficiency has been produced. For example, there are known light sources that materials containing a halide of a metal such as Na, Sc, Sn, Th, Tl, In, Li, Tm, Ho or Dy, particularly, a iodide and a bromide are used as a luminous material. However, since the enhancement of luminous of a light source increases heat generated, such a light source having a high luminous efficiency has a problem in a material of a translucent member such as a cover or the like which is applied on the light source. That is, the alumina material has resistance to halogen gas but the resistance to halogen gas is still insufficient. The alumina material, further, has a low thermal conductivity of 30 W/mK and therefore heat radiation of a light source becomes insufficient to cause a fear such that the lifetime of the light source will be shortened. Furthermore, since the temperature of the arc tube surface is non-uniform, the light source has a problem in that the color rendering properties are inferior. Accordingly, the advent of a translucent member having high resistance to halogen gas and thermal conductivity has been desired.

In order to solve the problems, an aluminum nitride having good heat resistance, thermal conductivity and mechanical strength properties is disclosed (reference to Patent document 1). This publication discloses an AIN sintered body having a light transmittance of 75% in a wavelength of from 0.2 µm to 30 µm is obtainable by sintering in an inert atmosphere at a temperature of from 1700 to 2100°C using powdery materials which particle diameter, metal impurity content and oxygen content are specified.

Furthermore, disclosed is an arc tube equipped with a translucent cover (hollow tube) composed of a tube-like aluminum nitride sintered body prepared by using, as a raw material, powdery aluminum nitride having a particle distribution such that the amount of particles having an average particle diameter (D) of from 0.3D to 1. 8D is at least 70% (Patent document 2). The document discloses an aluminum nitride sintered body having a total light transmittance of 84%.

According to the above techniques, it is possible to produce an aluminum nitride sintered body which translucency has been improved. The aluminum nitride sintered body, further, has room for improvement on the light transmittance. That is, when the aluminum nitride sintered body is used as a translucent cover, the light transmittance in the visible light region of from 400 nm to 800 nm is desirably over 85% in consideration of the reflection. However, the aluminum nitride sintered body prepared by the above known techniques has a light transmittance (400 nm to 800 nm) of at most 85%. On the other hand, the above alumina materials have inferior resistance to halogen gas and thermal conductivity as compared with the aluminum nitride sintered body, but have a light transmittance of over 95%. Therefore, it is desired that the aluminum nitride sintered body be further improved in the transmittance as compared with the alumina materials.

Regarding to the light transmission properties in the ultraviolet rays, conventional translucent aluminum nitride sintered bodies have room for improving the built up property of the light transmittance. The built up property of the light transmittance is an important property in the use as a translucent cover in order to realize a high light transmittance in the wide wavelength range of from the ultraviolet region to the infrared region.

The patent document 3 discloses an aluminum nitride sintered body having a depressed oxygen concentration of 400 ppm or less, a depressed metal impurity concentration of 150 ppm or less and a depressed carbon concentration of 200 ppm or less and also having an average crystal particle diameter of from 2 µm to 20 µm. This aluminum nitride sintered body has an inclination of a spectroscopy curve in the wavelength region of from 260 to 300 nm of at least 1.0 (%/nm), and a light transmittance in the wavelength region of from 400 to 800 nm of at least 86% and a wavelength of 400 nm or less when the light transmittance in the spectroscopy reaches to 60%.

As described above, there have been proposed various aluminum nitride sintered bodies having high light transmission properties. It is expected that the aluminum nitride sintered bodies be used for covers of light sources, particularly high intensity arc tubes. In the preparation of an arc tube, electrodes are inserted from the both ends of a tube-like hollow aluminum nitride sintered body and then the both ends of the tube are sealed. The tube sealing is carried out by charging a paste in the both ends of the tube and sintering them with thermal treatment. As the paste, a mixed paste containing aluminum nitride and metals having a high melting point such as molybdenum is used.
Patent document 1: JP-A-H2(1990)-26871
Patent document 2: JP-A-S60(1985)-193254
Patent document 3: JP-A-2005-119953

### Disclosure of the Invention

### OBJECT OF THE INVENTION

The sintering of the paste is carried out in an inert gas such as nitrogen or the like at a temperature of from 1500 to 1900°C for 5 to 50 hr. The atmosphere is reductive by carbon derived from the paste. In this process, an aluminum nitride sintered body also receives the heat treatment in the same conditions. As a result of the heat treatment, the light transmission properties of the aluminum nitride sintered body are sometimes lowered.

On this account, in order to recover the light transmission properties of the aluminum nitride sintered body after the sintering of the paste, it is subjected to heat treatment in a nitrogen atmosphere at a high temperature of about 1500 to 1900°C for a long period of time (5 to 50 hr). The heat treatment at a high temperature for a long period of time has an economical problem and further, the resulting products have a dispersion in quality because the temperature and the atmosphere in a furnace are uneven.

Under the circumstances, it is an object of the present invention to provide a process for recovering, by a simple means, the light transmission properties of an aluminum nitride sintered body which light transmission properties have been lowered by processing after sintering.

### SUMMARY OF THE INVENTION

The light transmission properties of an aluminum nitride sintered body are conventionally recovered by thermal treatment at a high temperature for a long period of time, as described above. Under the circumstances, the present inventors found that the light transmission properties can be sufficiently recovered by thermal treatment at a relatively low temperature. The present inventors, further, found that an aluminum nitride sintered body having extremely high light transmission properties, which has been not obtained in the prior arts, can be obtained by the thermal treatment at such a low temperature. Thus, the present invention has been accomplished.

The present invention has the following points.

(1) The process for producing an aluminum nitride sintered body having improved light transmission properties according to the invention comprises subjecting an aluminum nitride sintered body to thermal treatment in an inert atmosphere at a temperature of from 1300 to 1400°C for at least 1 hr.

(2) The process for producing an aluminum nitride sintered body having improved light transmission properties according to (1) is characterized in that the thermal treatment is carried out for 1 to 10 hr.

(3) The cover for light sources of the invention comprises a hollow aluminum nitride sintered body having a light transmittance in the visible light region of at least 87%, obtainable by thermally treating a hollow aluminum nitride sintered body in an inert atmosphere at a temperature of 1300 to 1400°C for at least 1 hr.

### EFFECT OF THE INVENTION

According to the present invention, the light transmission properties of an aluminum nitride sintered body having light transmission properties can be improved. Particularly the light transmission properties of an aluminum nitride sintered body having lowered light transmission properties can be recovered. Moreover, the present invention can prepare an aluminum nitride sintered body having extremely high light transmission properties, which cannot be obtained in the prior arts. Such an aluminum nitride sintered body is favorable for materials of arc tubes for high intensity discharge lamps.

### BRIEF DESCRIPTION OF THE DRAWING

Figure 1 shows a schematic drawing of a measuring apparatus for a light transmittance.
Figure 2-1 shows a drawing for illustrating an aluminum nitride sintered body of the present invention.
Figure 2-2 shows a drawing for illustrating an aluminum nitride sintered body of the present invention.

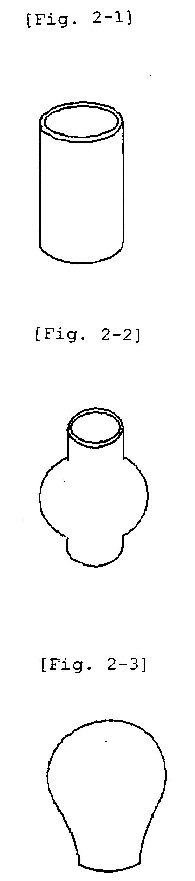

Figure 2-3 shows a drawing for illustrating an aluminum nitride sintered body of the present invention.

### BEST EMBODIMENT FOR CARRYING OUT THE INVENTION

The present invention will be described with the best embodiment in more detail below.

The aluminum nitride sintered body obtainable by the process of the present invention has a light transmittance in the visible light region of at least 87%, preferably from 88 to 96%, more preferably 90 to 96%, particularly preferably 91 to 96%.

The light transmittance of the aluminum nitride sintered body is determined by processing an aluminum nitride sintered body into a tube having a diameter of 10 mm and a thickness of 0.9 mm and measuring the light transmittance with light in the visible light region (wavelength of 400 to 800 nm).

The aluminum nitride sintered body of the invention has an extremely excellent light transmittance as described above and thereby it is preferably used for covers of various light sources. The shape of the aluminum nitride sintered body used as a cover for light sources is not particularly limited. Examples of the shape may include a hollow shape, a plate-like shape and other shapes. Especially, the hollow shape is general and preferable. In the specification, the hollow shape indicates a shape composed of walls forming a space where a light source is present. Examples of the hollow shape may include tube-like shapes such as a straight tube shape (referred to Figure 2-1) or transformed tube shape (referred to Figure 2-2), lamp spherical shape (referred to Figure 2-3) and spherical shapes not shown such as semi-spherical shape, spherical shape and elliptic sphere shape.

The aluminum nitride sintered bodies generally comprise aluminum nitride crystal particles and a grain boundary phase, which comprise a sintering aid as a main component. However, the grain boundary phase is not essential. The grain boundary phase is not always necessary, and the aluminum nitride sintered bodies of the present invention may include aluminum nitride sintered bodies free from a grain boundary phase, which only comprise aluminum nitride crystalline particles.

The aluminum nitride sintered bodies having the above properties have the optical properties as described above in addition to the high thermal conductivity and the high chemical corrosion resistance which both are inherent in aluminum nitride. Therefore, when they are applied on an arc tube in which a light source having high intensity is used, the light source can have long lifetime.

When the aluminum nitride sintered bodies are applied on the use of translucent covers such as ultraviolet ray-translucent windows, a high ultraviolet ray transmittance can be attained by the above optical properties.

Next, the process for producing the aluminum nitride sintered body of the invention will be described. The aluminum nitride sintered body of the invention is not restricted to the production process as long as it has the above physical properties.

The process for producing the aluminum nitride sintered body according to the invention is characterized by thermally treating, in an inert atmosphere at a temperature of from 1300 to 1400°C for at least 1 hr, an aluminum nitride sintered body prepared by a general sintering method or an aluminum nitride sintered body having light transmission properties lowered by processing after sintering (hereinafter these sintered bodies are sometimes referred to raw sintered materials).

Various aluminum nitride sintered bodies are used as a raw sintered material. An example of the production process thereof is described below, but the process is not limited by the example.

The raw sintered material can be prepared by forming a mixture of powdery aluminum nitride and a sintering aid into a molded article having the prescribed form and sintering the article in a reducing atmosphere. In the present invention, specifically, the mixture is formed into a hollow shape or a plate-like shape and then sintered to prepare a raw sintered material having the prescribed shape. It is preferred to produce a hollow raw sintered material by forming the mixture into a hollow shape and sintering.

In order to depress the concentration of impurities in the sintered material, the powdery aluminum nitride has a high purity of at least 97 % by weight, preferably at least 99 % by weight. It is best to use an aluminum nitride having a high purity such that the metal impurity concentration (concentration of metals other than Al) is 50 ppm or less and the oxygen concentration is decreased to be 1 % or less by weight, especially 0.8 % or less by weight.

Examples of the sintering aid are known ones, for example, alkali earth oxides such as CaO, SrO or Ca₃Al₂O₆; and rare earth oxides such as Y₂O₃, CeO₂, HO₂O₃, Yb₂O₃, Gd₂O₃, Nb₂O₃, Sm₂O₃ and Dy₂O₃. Most generally used is yttrium oxide (Y₂O₃). The sintering aid is not necessarily an oxide. For example, it may be a carbonate, nitrate or phosphate. The addition amount of the sintering aid is from 2 parts by weight to 20 parts by weight based on 100 parts by weight of the powdery aluminum nitride. When the amount is less than 2 parts by weight, the high purification of the aluminum nitride sintered body cannot be realized, and lowering of the properties such as light transmittance or thermal conductivity may be induced. On the other hand, when it is over 20 parts by weight, the sintering aid added cannot vaporize and diffuse efficiently, and lowering of the properties such as light transmittance or thermal conductivity may be induced.

The mixing of the powdery aluminum nitride and the powdery sintering aid can be carried out by a known method. For example, it is preferred to employ a method of dry or wet mixing with a mixing machine such as ball mill or the like. In the wet mixing, a dispersing medium such as an alcohol or hydrocarbon is used and furthermore the alcohol or hydrocarbon is preferably used on the point of dispersibility.

Prior to the sintering, the mixed powder is formed into the prescribed shape in accordance with the use thereof. The shape formation can be carried out by a known method. In order to form a molded article having high strength and enhance the yield thereof, it is preferred to carry out the forming using an organic binder.

For example, the mixed powder is mixed with the organic binder and optionally a dispersing agent, plasticizer and solvent to prepare a slurry or paste for forming and then the slurry or paste for forming is formed into a molded article by a molding means such as a doctor blade method, extrusion molding method, injection molding method or casting molding method.

Moreover, the molding can be carried out by a compression molding method without using the organic binder. For example, the mixed powder of the powdery aluminum nitride and powdery sintering aid is formed into a tentative molded article with a mono-axial molding machine and the tentative molded article is molded with pressure at 1 to 4 t/cm² using a CIP (cold iso-static press) molding machine to prepare a molded article.

The resulting molded article is submitted to sintering after de-waxing (removal of binder).

The de-waxing can be carried out by heating the molded articles in arbitrary atmospheres such as air, nitrogen and hydrogen. It is preferred to carry out the de-waxing in a nitrogen atmosphere because the amount of residual carbon is easily regulated. The de-waxing temperature, which differs in accordance with the kind of the organic binder, is generally from 300 to 900°C, preferably 300 to 700°C. When the molding is carried out without using the organic binder in the compressing molding method, the above de-waxing step is unnecessary.

The sintering is carried out in a reducing atmosphere in order to effectively remove the sintering aid and decrease the metal impurity concentration or the oxygen concentration in the sintered body.

Examples of the method for exerting the reducing atmosphere may include a method of coexisting a carbon-generating source together with the molded article in a sintering vessel, a method of using a vessel made of carbon as a sintering vessel and the like. Among the methods, it is preferred to employ the method of coexisting a carbon-generating source together with the molded article in a sintering vessel, taking the thermal conductivity and color unevenness of a resulting sintered body into consideration.

The carbon-generating source is not particularly limited. It is possible to use carbon having a known form such as amorphous carbon or graphite. A solid carbon is preferable. The form of the carbon is not particularly limited. Any of powdery carbon, fiber carbon, felt-like carbon, sheet-like carbon and plate-like carbon may be used and further the combination thereof may be used. Among them, the plate-like amorphous carbon and graphite are preferable taking the preparation of higher thermal conductivity into consideration.

The method for introducing the molded article and carbon into a vessel is not particularly limited. They may be introduced in any form of contact and non-contact each other. Among them, the non-contact form is preferable in the easiness of controlling the thermal conductivity of a resulting sintered body. Furthermore, as the non-contact form, a known form may be employed, and examples thereof may include a method of providing a gap between the carbon and the molded article, a method of making the non-contact form by providing powder such as boron nitride or the like between the carbon and the molded article, and a method of forming the non-contact form by providing a ceramic plate such as aluminum nitride, boron nitride or the like between the carbon and the molded article. Taking the improvement in the thermal conductivity into consideration, preferred is the method of forming the non-contact form by providing a plate between the carbon and the molded article. Particularly, preferred is a method of forming the non-contact form in a sealing vessel by providing a plate so as to block between a space containing the carbon and a space containing the molded article as much as possible for preparing a raw sintered material having a higher thermal conductivity.

The sintering in a reducing atmosphere is preferably carried out at a temperature of from 1500 to 2000°C for at least 3 hr, particularly for at least 10 hr. Moreover, when the sintering is carried out for a long period of time, the crystal particles of the aluminum nitride sintered body is developed and further the carbon concentration in the sintered body is increased. Therefore, the sintering time in a reducing atmosphere is preferably controlled to be 200 hr or less, more preferably 100 hr or less, most preferably 50 hr or less.

In order to certainly decrease the carbon concentration in the sintered body into the range as described later, it is preferred to carry out sintering in a neutral atmosphere in combination with the above sintering in a reducing atmosphere. For example, it is preferred to employ a method of carrying out sintering in a reducing atmosphere after the sintering in a neutral atmosphere, a method of carrying out sintering in a reducing atmosphere after the sintering in a neutral atmosphere, and then carrying out sintering in a neutral atmosphere. Namely, when the sintering in a reducing atmosphere is carried out for a long period of time, the carbon concentration is increased although the metal impurity concentration can be depressed in the range as described later, and consequently, the optical properties of the sintered body are decreased. Therefore, by limiting the sintering time in a reducing atmosphere into the above range and carrying out the sintering in a neutral atmosphere appropriately, a dense sintered body having high strength can be obtained.

In the above, the neutral atmosphere means a condition that oxygen O₂ and carbon C are not substantially present in the atmosphere and specifically it means an atmosphere of an inert gas such as nitrogen or argon. The sintering in a neutral atmosphere is carried out by purging the inside of the sealed vessel with an inert gas. As the sealed vessel, a vessel made from a ceramic such as aluminum nitride or boron nitride or a vessel made from a non-carbon material such as tungsten W or molybdenum Mo is used and particularly the vessel made from a ceramic such as aluminum nitride or boron nitride is preferred with respect to the durability. It, further, is possible to use a vessel obtainable by covering the inside of the carbon vessel with a non-carbon material having no permeability to gases. In actual fact, the sintering may be carried out in a condition such that a carbon source other than the residual carbon in the molded body is not present in the inside space of the sealed vessel.

The temperature of the sintering in a neutral atmosphere is preferably from 1500 to 1900°C, and the sintering time, which differs according to the sintering time in a reducing atmosphere, is usually from 3 to 100 hr, preferably 30 to 50 hr.

In addition to the aluminum nitride sintered body obtainable by the above known method, a sintered body prepared by subjecting the aluminum nitride sintered body to any processing can be used as a raw sintered material. An example of the any processing may include a processing such that an electrode is formed on a tube-like aluminum nitride sintered body and thereby an arc tube is prepared. In the production of the arc tube, electrodes are inserted from the both ends of a hollow tube-like aluminum nitride sintered body and thereafter the both ends of the tube are sealed. The tube sealing is carried out by filling a paste in the tube both ends in which the electrodes are inserted, and sintering the tube with thermal treatment. As the paste, a mixed paste containing aluminum nitride and a metal having a high melting point such as molybdenum or the like is used. The sintering of the paste is carried out in an inert gas such as nitrogen or the like at a temperature of from 1500 to 1900°C for about 1 to 50 hr. The atmosphere becomes reducible by carbon derived from the paste. During the sintering, the aluminum nitride sintered body is also subjected to the heat treatment in the same conditions. As a result of the heat treatment, the light transmission properties of the aluminum nitride sintered bodies are sometimes lowered. In the present invention, the sintered aluminum nitride having the light transmission properties lowered by such a processing is also preferably used as a raw sintered material.

However, the aluminum nitride sintered body processed with the heat treatment in the conditions of the present invention as described later is not used as a raw sintered material. Even if the present invention is further applied on the aluminum nitride sintered body having the light transmission properties improved by the method of the present invention, the improvement of the light transmission properties cannot be expected. However, even if such a sintered body, when the light transmission properties thereof is lowered by any post processings, the light transmission properties can be sometimes recovered by the heat treatment in the conditions of the present invention. Therefore, the sintered body having lowered light transmission properties can be also used a raw sintered material.

In the present invention, the light transmittance in the visible light region of such a raw sintered material is not particularly limited. Specifically, a low translucent aluminum nitride sintered body having a light transmittance of usually less than 87%, preferably 82 to 86%, more preferably 83 to 86%, furthermore preferably 83 to 85% can be used as the raw sintered maerial. When the light transmittance of the raw sintered material is low, the improvement of the light transmission properties can be remarkably attained by the heat treatment as described later. That is, an aluminum nitride sintered body having extremely high light transmission properties, which has not been prepared conventionally, can be prepared from the aluminum nitride sintered body having low light transmission properties.

It is desirable for the raw sintered material to have an oxygen concentration of preferably 1000 ppm or less, more preferably from 800 to 100 ppm, a carbon concentration of preferably 200 ppm or less, more preferably from 150 to 10 ppm and a metal impurity concentration of preferably 300 ppm or less, more preferably from 200 to 10 ppm. The metal impurity concentration means a concentration of metals other than Al, namely a total concentration of metals derived from the sintering aid and other metals (for example, metals derived from inevitable impurities in the raw material fine particles). When these concentrations are in the above ranges, the thermal treatment of the present invention can be remarkably effective. These concentrations are determined by the method as described in the examples.

The process for producing the aluminum nitride sintered body of the present invention is characterized by thermally treating the raw sintered material in an inert atmosphere at a temperature of from 1300 to 1400°C for at least 1 hr.

It is unfavorable to conduct thermal treatment by elevating the temperature to 1400°C or higher after the thermal treatment at a temperature of from 1300 to 1400°C for at least 1 hr, because even if the light transmission properties of the sintered body are improved by the thermal treatment at a temperature of from 1300 to 1400°C, the light transmission properties are lowered again by the post thermal treatment at a high temperature.

The thermal treatment is carried out in an inert gas such as nitrogen or argon or in a vacuum of 10 torr or less in an electric furnace. When the inert gas is passed through, the flow rate is preferably from 0.1 to 10 L/min, more preferably 0.5 to 2 L/min.

In this procedure, the thermal treatment atmosphere is sometimes affected by the exothermic materials even if an inert gas is introduced in accordance with the kind of the exothermic materials. In a tungsten furnace, the influence is not caused, but in a carbon furnace, the furnace atmosphere sometimes becomes reducible by carbon used as the exothermic material. When the thermal treatment atmosphere is reducible, the improvement of the light transmission properties, which is the object of the present invention, cannot be attained. Therefore, in the use of the carbon furnace, it is necessary to exclude the influence of the furnace atmosphere by accommodating the aluminum nitride sintered body to be thermally treated into a jig. The jig is composed of a vessel and a lid covering the vessel. The influence of the furnace atmosphere can be excluded by accommodating the aluminum nitride sintered body in the vessel and covering the vessel with the lid. Such a jig is made of aluminum nitride, boron nitride or tungsten. In the tungsten furnace, it is unnecessary to use the jig because the exothermic materials do not affect on the furnace atmosphere.

The thermal treatment temperature is from 1300 to 1400°C, preferably 1320 to 1380°C, more preferably 1330 to 1370°C, especially preferably 1340 to 1360°C. The thermal treatment is preferably carried out in a constant temperature condition in the above temperature range.

The raw sintered material is subjected to the thermal treatment at such a temperature and thereby the light transmittance is improved. That is, the thermal treatment can increase the light transmittance of the raw sintered material by usually 4 to 10%. Specifically, as described in the examples, the raw sintered material having a 83% light transmittance is improved to have an about 91% light transmittance (in Example, raw sintered material 2). Furthermore, even if the light transmittance of the raw sintered material is in a high level, the effect of the present invention is exhibited. When the light transmittance of the raw sintered material is about 85%, the light transmittance is improved to be about 92% by the thermal treatment (in Example, raw sintered material 3).

Although the mechanism of the improvement for the light transmittance is not entirely clear and it is not theoretically limited by the followings, the improvement of the light transmittance is thought to be due to a change in an electronic structure (lattice defect) of the aluminum nitride crystal. At a thermal treatment temperature lower than 1300°C, the aluminum nitride crystal is not changed to have an optimum electronic structure because the temperature is too low, and thereby the electronic structure is in disorder to lower the light transmittance. At a thermal treatment temperature higher than 1400°C, the Al-N bond in the aluminum nitride crystal is cut and thereby Al atoms are liberated from the crystal to cause defects. As a result, it is considered that the crystallinity of the aluminum nitride is lowered (the lattice defect is increased) to lower the light transmittance. On the other hand, the thermal treatment at a temperature of from 1300 to 1400°C causes re-arrangement of Al atoms and N atoms appropriately and thereby the lattice defects are decreased. This is thought to be a reason why the light transmittance is improved.

The thermal treatment time is at least 1 hr, preferably 1 to 10 hr, more preferably 2 to 8 hr, especially 4 to 6 hr. Even if the thermal treatment is carried out for a too long period of time, the improvement in the light transmittance is not changed largely.

The aluminum nitride sintered body of the present invention thus prepared is used in various forms such as tube-like, plate-like, curve-like, spherical, elliptic cup-like or bowl-like form according to the structure of the use, for example, covers for light sources.

### Example

The present invention will be described with reference to the following examples, but it is not restricted by the examples.

The various physical properties in the examples and comparative examples are measured by the following methods.

### 1) Light transmittance

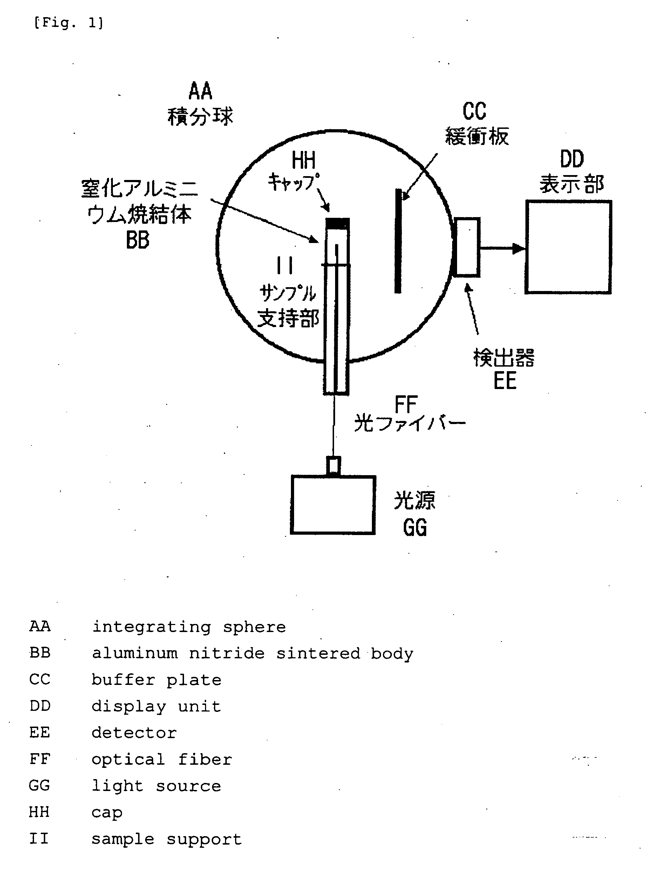

The light transmittance of a tube-like aluminum nitride sintered body was determined by processing an aluminum nitride sintered body into a tube-like form having a diameter of 10 mm and a thickness of 0.9 mm and measuring the light transmittance thereof using a light transmittance measuring device as shown in Fig. 1.

### 2) Impurity concentration

The impurity concentration of metals (metal element concentration) was determined by grinding an aluminum nitride sintered body to make into powder, thermally decomposing it with addition of nitric acid and phosphoric acid and measuring the impurity concentration of a resulting solution by means of "ICPS-1000-II" manufactured by Shimazu Corporation.

The carbon concentration was determined by making an aluminum nitride sintered body into powder, burning the powder in an oxygen gas stream using "EMIA-110" manufactured by Horiba Ltd., and determining the carbon concentration from the amounts of CO and CO₂ gases generated.

The oxygen concentration was determined by making an aluminum nitride sintered body into powder and determining the oxygen concentration from the amount of CO gas generated with a high temperature thermal decomposition method in a graphite crucible using "EMGA-2800" manufactured by Horiba Ltd.

The following tube-like aluminum nitride sintered bodies having a 10 mm diameter (outer diameter), a 0.9 mm thickness and a 15 mm length were used as a raw sintered material.

Raw sintered material 1: Used was an aluminum nitride sintered body having a light transmittance of 82%, an oxygen concentration of 600 ppm, a carbon concentration of 100 ppm and a metal impurity concentration of less then 100 ppm.

Raw sintered material 2: Used was an aluminum nitride sintered body having a light transmittance of 83%, an oxygen concentration of 500 ppm, a carbon concentration of 100 ppm and a metal impurity concentration of less then 100 ppm.

Raw sintered material 3: Used was an aluminum nitride sintered body having a light transmittance of 85%, an oxygen concentration of 400 ppm, a carbon concentration of 100 ppm and a metal impurity concentration of less then 100 ppm.

### Experimental Example 1

Each of the raw sintered materials 1 to 3 was set in an AIN made jig in an electric furnace (tungsten furnace) and thermally treated in a nitrogen gas flow rate of 1 L /min at the temperature as described in Table 1 for 5 hr. The temperature-elevating rate was 10°C/min. After the thermal treatment, the resulting sintered body had a light transmittance as shown in Fig. 1.

**Table 1**

| Thermal treatment temperature (°C) | Light transmittance (%) after thermal treatment | | |
|---|---|---|---|
| | Raw sintered material 1 | Raw sintered material 2 | Raw sintered material 3 |
| Before thermal treatment | 82 | 83 | 85 |
| 1000 | 75 | 76 | 78 |
| 1100 | 77 | 78 | 80 |
| 1200 | 81 | 82 | 84 |
| 1300 | 87 | 87 | 89 |
| 1320 | 88 | 88 | 89 |
| 1330 | 89 | 89 | 90 |
| 1340 | 90 | 90 | 91 |
| 1350 | 90 | 91 | 92 |
| 1360 | 90 | 90 | 91 |
| 1370 | 88 | 89 | 90 |
| 1380 | 88 | 88 | 89 |
| 1400 | 87 | 88 | 88 |
| 1500 | 79 | 80 | 81 |
| 1600 | 78 | 79 | 80 |

### Experimental Example 2

Each of the raw sintered materials 1 to 3 was set in an AIN made jig in an electric furnace (tungsten furnace) and thermally treated in a nitrogen gas flow rate of 1 L /min at the temperature as described in Table 2 for 2 hr. The temperature-elevating rate was 10°C/min. After the thermal treatment, the resulting sintered body had a light transmittance as shown in Fig. 2.

**Table 2**

| Thermal treatment temperature (°C) | Light transmittance (%) after thermal treatment | | |
|---|---|---|---|
| | Raw sintered material 1 | Raw sintered material 2 | Raw sintered material 3 |
| Before thermal treatment | 82 | 83 | 85 |
| 1000 | 74 | 75 | 77 |
| 1100 | 76 | 76 | 79 |
| 1200 | 79 | 82 | 83 |
| 1300 | 87 | 87 | 89 |
| 1320 | 88 | 88 | 89 |
| 1330 | 89 | 89 | 90 |
| 1340 | 90 | 90 | 91 |
| 1350 | 90 | 91 | 92 |
| 1360 | 90 | 90 | 91 |
| 1370 | 88 | 89 | 90 |
| 1380 | 88 | 88 | 89 |
| 1400 | 87 | 88 | 88 |
| 1500 | 77 | 78 | 80 |
| 1600 | 75 | 77 | 79 |

### Experimental Example 3

The raw sintered materials 1 was set in an AlN made jig in an electric furnace (tungsten furnace), maintained in a nitrogen gas flow rate of 1 L /min at 1350°C for 2 hr, and further thermally treated at 1500°C for 3 hr. The temperature-elevating rate was 10°C/min. After the thermal treatment, the resulting sintered body had a light transmittance of 76%.

### POSSIBILITY IN INDUSTRIAL USE

According to the present invention, the light transmission properties of an aluminum nitride sintered body can be improved and particularly, the light transmission properties of an aluminum nitride sintered body having lowered light transmission properties can be recovered. Moreover, it is possible to prepare an aluminum nitride sintered body having extremely high light transmission properties that were not prepared conventionally. Such an aluminum nitride sintered body is favorable to materials for arc tubes in high intensity discharge lamps.

## Claims

1. A process for producing an aluminum nitride sintered body having improved light transmission properties which process comprises subjecting an aluminum nitride sintered body to thermal treatment in an inert atmosphere at a temperature of from 1300 to 1400°C for at least 1 hr.

2. The process for producing an aluminum nitride sintered body having improved light transmission properties according to claim 1 wherein the thermal treatment is carried out for 1 to 10 hr.

3. A cover for light sources comprising a hollow aluminum nitride sintered body having a light transmittance in the visible light region of at least 87%, which body is obtainable by thermally treating a hollow aluminum nitride sintered body in an inert atmosphere at a temperature of 1300 to 1400°C for at least 1 hr.
